# EUROPÄISCHE PATENTANMELDUNG

(11) **EP 3 502 631 A1**
(43) Veröffentlichungstag der Anmeldung: **26.06.2019**
(21) Anmeldenummer: 18199950.9
(22) Anmeldetag: 11.10.2018
(51) Int. Cl.: G01D 18/00

(54) **ELEKTRISCHES MESSGERÄT UND PORTABLES MESSSYSTEM**

(30) Priorität: 13.10.2017 DE 102017218355
(71) Anmelder: Rohde & Schwarz GmbH & Co. KG, 81671 München (DE)
(72) Erfinder: DING, Chow Han, 463808 Singapore (SG)
(74) Vertreter: Isarpatent

(57) **Zusammenfassung**

Die vorliegende Erfindung offenbart ein elektrisches Messgerät (100, 200, 300) zum erfassen elektrischer Signale (102, 202, 302), mit einer Umfelderfassungseinrichtung (103, 203, 303), welche ausgebildet ist, Eigenschaften des momentanen Umfelds des elektrischen Messgeräts (100, 200, 300) zu erfassen und entsprechende Umfeldsignale (105, 205, 305) auszugeben, und einer Steuereinrichtung (106, 206, 306), welche ausgebildet ist, Betriebsparameter des elektrischen Messgeräts (100, 200, 300) in Abhängigkeit der Umfeldsignale (105, 205, 305) einzustellen. Ferner offenbart die vorliegende Erfindung ein portables Messsystem (320).

## Beschreibung

Die vorliegende Erfindung bezieht sich auf ein elektrisches Messgerät. Ferner bezieht sich die vorliegende Erfindung auf ein entsprechendes portables Messsystem.

### Technisches Gebiet

Obwohl die vorliegende Erfindung im Folgenden hauptsächlich in Verbindung mit Messgeräten beschrieben wird, ist sie darauf nicht beschränkt und kann ebenso mit anderen elektronischen Geräten genutzt werden.

Moderne Messgeräte können in einer Vielzahl von Anwendungen genutzt werden. Durch die fortschreitende Miniaturisierung der Elektronik und immer leistungsfähigere mobile Energieversorgungssysteme ist es ferner möglich, solche Messgeräte auch mobil einzusetzen.

Die Messgeräte können also nicht nur genutzt werden, um die jeweilige Messaufgabe im Labor durchzuführen. Vielmehr können die Messgeräte direkt in der jeweiligen Anwendung installiert bzw. genutzt werden, um dort die Messaufgabe im Betrieb des jeweiligen Geräts durchzuführen.

Die Messgeräte müssen dazu an die jeweilige Anwendung bzw. Messaufgabe angepasst werden. Die kann z.B. durch den jeweiligen Benutzer erfolgen, ist aber zeitintensiv und fehleranfällig.

### Offenbarung der Erfindung

Es ist daher eine Aufgabe der vorliegenden Erfindung eine vereinfachte Konfiguration von Messgeräten zu ermöglichen.

Demgemäß offenbart die vorliegende Erfindung ein elektrisches Messgerät mit den Merkmalen des Patentanspruchs 1 und ein portables Messsystem mit den Merkmalen des Patentanspruchs 9.

### Demgemäß ist vorgesehen:

Ein elektrisches Messgerät zum Erfassen elektrischer Signale, mit einer Umfelderfassungseinrichtung, welche ausgebildet ist, Eigenschaften des momentanen Umfelds des elektrischen Messgeräts zu erfassen und entsprechende Umfeldsignale auszugeben, und einer Steuereinrichtung, welche ausgebildet ist, Betriebsparameter des elektrischen Messgeräts in Abhängigkeit der Umfeldsignale einzustellen.

### Ferner ist vorgesehen:

Ein portables Messsystem mit einem elektrischen Messgerät gemäß der vorliegenden Erfindung, und einer Eingabevorrichtung, welche mindestens einen Umfeldsensor aufweist und ausgebildet ist, Eigenschaften des momentanen Umfelds der Eingabevorrichtung an das elektrische Messgerät zu übermitteln.

Die vorliegende Erfindung basiert auf der Erkenntnis, dass moderne Messgeräte üblicherweise über eine Vielzahl von Betriebsparametern verfügen. Ein Benutzer muss daher üblicherweise vor der Durchführung einer entsprechenden Messung die entsprechenden Betriebsparameter einstellen.

Die vorliegende Erfindung sieht zur Unterstützung des Benutzers daher die Umfelderfassungseinrichtung vor, die Eigenschaften des momentanen Umfelds des elektrischen Messgeräts erfasst. Unter den Eigenschaften des Umfelds sind alle physikalischen bzw. durch die Umfelderfassungseinrichtung messbaren Größen zu verstehen, die einen Rückschluss auf die Art bzw. Lage der momentanen Umgebung liefern können. So kann z.B. bei Vorhandensein entsprechender starker elektromagnetischer Signale darauf geschlossen werden, dass sich das elektrische Messgerät in der Nähe einer Basisstation befindet. Stark schwankende Luftdruckwerte können z.B. darauf schließen lassen, dass sich das elektrische Messgerät in einem Hubschrauber oder dergleichen befinden könnte. Es versteht sich, dass die Umfelderfassungseinrichtung entsprechende Sensoren zur Erfassung oder externe Schnittstellen zur Übertragung der Eigenschaften des Umfelds aufweisen kann.

Die Umfelderfassungseinrichtung gibt entsprechende Umfeldsignale an die Steuereinrichtung aus, welche diese auswertet. Die Steuereinrichtung passt dann basierend auf den Umfeldsignalen Betriebsparameter des elektrischen Messgeräts an bzw. stellt diese ein.

Unter Betriebsparametern sind alle Parameter des elektrischen Messgeräts zu verstehen, die den Betrieb des elektrischen Messgeräts beeinflussen bzw. zu dessen Betrieb nötig sind. Darunter fallen z.B. alle Parameter, die ein Benutzer des elektrischen Messgeräts manuell einstellen kann.

Das elektrische Messgerät kann z.B. ein Oszilloskop, ein Spektrumanalysator, ein Vektor-Netzwerkanalysator, ein Antennenanalysator oder dergleichen sein, welche für unterschiedliche Messaufgaben genutzt werden können.

Die Steuereinrichtung kann erkennen, an welchem Ort bzw. in welcher Umgebung das elektrische Messgerät momentan eingesetzt wird. Dies ermöglicht es der Steuereinrichtung ferner die Betriebsparameter zu bestimmen, die für die jeweilige Einsatzumgebung geeignet sind.

Obwohl hier nicht explizit genannt, versteht sich, dass das elektrische Messgerät Messeingänge und entsprechende Signalverarbeitungsstufen aufweist. Eine weiterführende Signalauswertung z.B. durch eine Prozessor, DSP oder dergleichen ist ebenfalls möglich.

Vorteilhafte Ausführungsformen und Weiterbildungen ergeben sich aus den Unteransprüchen sowie aus der Beschreibung unter Bezugnahme auf die Figuren.

In einer Ausführungsform kann die Umfelderfassungseinrichtung zum Erfassen der Umfeldsignale mindestens einen analogen Signaleingang und/oder einen digitalen Signaleingang und/oder einen Beschleunigungssensor und/oder einen Bewegungssensor und/oder einen Höhensensor und/oder einen Gyroskop-Sensor und/oder einen Temperatursensor und/oder einen satellitenbasierten Positionssensor und/oder Magnetfeldsensor und/oder einen Empfänger zum Empfang drahtloser Signale aufweisen.

Die unterschiedlichen oben gennannten Sensoren können in der Umfelderfassungseinrichtung genutzt werden, um zu Bestimmen in welchem Umfeld sich das elektrische Messgerät befindet. Beispielsweise kann über einen Beschleunigungssensor, z.B. einen 1-, 2- oder 3-Achsen Beschleunigungssensor, erfasst werden, ob sich das elektrische Messgerät in einem bewegten Objekt befindet. Über charakteristische Bewegungsmuster kann z.B. auch festgestellt werden, ob sich das elektrische Messgerät in einem Flugzeug, einem Hubschrauber, einem Fahrzeug oder dergleichen befindet. Eine solche Analyse kann ebenfalls z.B. mit einem Bewegungssensor durchgeführt werden.

Mit einem Höhensensor oder Gyroskopsensor kann z.B. auch festgestellt werden, ob sich das elektrische Messgerät in einem Flugzeug oder Hubschrauber oder dergleichen befindet. Satellitenbasierte Positionssensoren können zur direkten und exakten Positionsbestimmung des elektrischen Messgeräts genutzt werden. So kann z.B. festgestellt werden, dass sich das elektrische Messgerät an einem Sendemasten oder dergleichen befindet.

Empfänger zum Empfang drahtloser Signale können beliebige Empfängerbausteine sein. Insbesondere könne diese z.B. Empfängerbausteine für drahtlose digitale Kommunikationssysteme, z.B. UMTS, LTE, GSM, WIFI, Bluetooth, ZigBee oder dergleichen sein. Mit Hilfe solcher Empfänger können z.B. Kommunikationspartner oder Basisstationen identifiziert werden und daraus der Ort abgeleitet werden, an welchem sich das elektrische Messgerät befindet.

In einer Ausführungsform kann die Steuereinrichtung eine Schwellwerterkennungseinheit aufweisen und ausgebildet sein, mindestens eines der erfassten Umfeldsignale mit einem vorgegebenen Schwellwert oder einer Sequenz von Schwellwerten zu vergleichen, um das momentane Umfeld des elektrischen Messgeräts zu bestimmen.

Einzelne Schwellwerte können z.B. Grenzwerte für eine Empfangsleistung eines Empfängers, ein Spannungsniveau eine Stromstärke oder dergleichen sein. Wird z.B. der Schwellwert für die Empfangsleistung eines Mobilfunkempfängers überschritten, kann sich das elektrische Messgerät in der Nähe einer entsprechenden Basisstation befinden.

Wird bei einer Spannung von 5 V oder 3.3 V gemessen, wird das elektrische Messgerät z.B. in einer digitalen oder Anwendung mit sehr niedrigen Spannungen eingesetzt. Eine Spannung von z.B. 230 V deutet dagegen auf einen Betrieb in einer Anwendung mit größeren Leistungen hin. Entsprechend kann die Steuereinrichtung z.B. Messbereiche einstellen und die Dimensionierung der Achsen wählen.

Für einzelne Umfeldsignale können in dem elektrischen Messgerät unterschiedliche Schwellwerte vorgegeben werden. Es ist ferner möglich, dass Schwellwertsequenzen gespeichert werden.

In einer Ausführungsform kann die Umfelderfassungseinrichtung eine Kommunikationsschnittstelle aufweisen und ausgebildet sein, Steuersignale zu empfangen und an die Steuereinrichtung weiterzuleiten. Ferner kann die Steuereinrichtung ausgebildet sein, basierend auf den Steuersignalen die Betriebsparameter des elektrischen Messgeräts einzustellen.

Es kann z.B. eine Bedieneinheit in dem elektrischen Messgerät angeordnet sein oder drahtlos mit diesem kommunizieren. Eine solche Bedieneinheit kann also z.B. als Tastenfeld, Touchscreen oder dergleichen des elektrischen Messgeräts ausgebildet sein. Alternativ kann die Bedieneinheit z.B. ein Smartphone oder Tablet-PC sein. Ein Benutzer kann über die Bedieneinheit z.B. ein Umfeld für das elektrische Messgerät oder entsprechende Betriebsparameter auswählen. Die Bedieneinheit übermittelt diese Daten dann an die Umfelderfassungseinrichtung bzw. direkt an die Steuereinrichtung. Die Steuereinrichtung stellt dann die entsprechenden Betriebsparameter ein. Wählt der Benutzer ein Umfeld aus, kann die Steuereinrichtung einen Satz von für das jeweilige Umfeld vorgegebenen Standard-Parametern nutzen, z.B. aus dem Speicher laden.

In einer Ausführungsform können die Betriebsparameter eine Eingangsempfindlichkeit und/oder eine Achsenskalierung und/oder eine Messmethode und/oder Triggereinstellungen und/oder eine Triggerauswahl und/oder einen Einschaltzustand des elektrischen Messgeräts aufweisen.

Die Eingangsempfindlichkeit bezieht sich auf Mess- oder Signaleingänge des elektrischen Messgeräts. Bei Messgeräten, wie z.B. Oszilloskopen, kann die Eingangsempfindlichkeit der analogen Eingänge an die jeweilige Messaufgabe angepasst werden. Ferner können Spannungs- und/oder Strombereiche für die Messeingänge eingestellt werden. Die Achsenskalierung betrifft die Darstellung der durch das elektrische Messgerät erfassten Messwerte. Triggereinstellungen z.B. betreffen Schwellwerte oder Schwellwertkombinationen bzw.-sequenzen für einen oder mehrere der Eingänge des elektrischen Messgeräts. Die Triggerauswahl kann z.B. die Auswahl eines voreingestellten Triggers bezeichnen. Unter dem Einschaltzustand des elektrischen Messgeräts ist zu verstehen, ob das elektrische Messgerät eingeschaltet ist oder ob es ausgeschaltet ist. Beispielsweise kann die Steuereinrichtung das elektrische Messgerät abschalten, wenn die momentane Umgebung für das elektrische Messgerät ungeeignet ist oder umgekehrt.

Die Steuereinrichtung kann ferner unterschiedliche Messmethoden auswählen. Mögliche Messmethoden sind z.B. eine Leistungsmessung, eine Messung in der Zeitdomäne oder in der Frequenzdomäne, eine EVM-Messung (elektromagnetische Verträglichkeit) oder eine herkömmliche Messung.

In einer Ausführungsform kann das elektrische Messgerät einen Speicher aufweisen, wobei die Steuereinrichtung mit dem Speicher gekoppelt sein kann und ausgebildet sein kann, Gruppen aus einem oder mehreren von Betriebsparametern mit entsprechenden Gruppen aus einem oder mehreren von Werten der Umfeldsignale zu speichern.

Die Steuereinrichtung kann in dem Speicher Sätze von Betriebsparametern mit den entsprechenden Werten der Umfeldsignale speichern. Beispielsweise kann ein Benutzer in einer bestimmten Umgebung Betriebsparameter vorgeben. Das Speichern kann z.B. automatisch oder erst nach Rückfrage bei dem Benutzer erfolgen. Dies ermöglicht es, später aktuell erfasste Werte von Umfeldsignalen zu erfassen und mit den gespeicherten Werten zu vergleichen.

In einer Ausführungsform kann die Steuereinrichtung ausgebildet sein, von der Umfelderfassungseinrichtung ausgegebene Umfeldsignale mit den gespeicherten Umfeldsignalen zu vergleichen und bei einer Übereinstimmung, insbesondere einer Übereinstimmung innerhalb eines vorgegebenen Intervalls, mit einer der gespeicherten Gruppe von Umfeldsignalen die entsprechenden Betriebsparameter aus dem Speicher zu laden und das elektrische Messgerät entsprechend einzustellen.

Die Steuereinrichtung kann aktuelle Umfeldsignale bzw. deren aktuelle Werte mit den Gruppen gespeicherter Werte der Umfeldsignale vergleichen. Bei einer ausreichend großen Übereinstimmung kann die Steuereinrichtung die jeweilige Konfiguration des elektrischen Messgeräts durch laden der jeweiligen Betriebsparameter herstellen. Es versteht sich, dass z.B. eine Bestätigung eines Benutzers abgefragt werden kann, bevor die Betriebsparameter eingestellt werden.

In einer Ausführungsform kann das elektrische Messgerät eine Anzeigeeinrichtung aufweisen, welche mit der Steuereinrichtung gekoppelt sein kann, wobei die Steuereinrichtung ausgebildet sein kann, den Umfeldsignalen entsprechende Informationen auf der Anzeigeeinrichtung anzuzeigen.

Die Anzeigeeinrichtung kann z.B. ein Display in dem elektrischen Messgerät sein. Alternativ kann die Anzeigeeinrichtung auch in einem externen Gerät, z.B. einem Smartphone oder Tablet-PC angeordnet sein. Die Informationen können z.B. Warnsignale sein, wenn die Umweltinformationen hohe Spannungen oder Ströme kennzeichnen. Ferner können die Informationen Datenblätter oder sog. Application Notes oder Anzeigen für andere Messgeräte aufweisen, welche den Einsatz des elektrischen Messgeräts unter den jeweiligen Umgebungsbedingungen erläutern.

In dem portablen Messsystem kann das elektrische Messgerät ausgebildet sein, Informationen zu dem momentanen Umfeld des elektrischen Messgeräts an die Eingabevorrichtung zu übermitteln, wobei die Eingabevorrichtung eine Anzeigeeinrichtung aufweisen kann und ausgebildet sein kann, die Informationen anzuzeigen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform eines erfindungsgemäßen elektrischen Messgeräts,
- Fig. 2: ein Blockschaltbild einer weiteren Ausführungsform eines erfindungsgemäßen elektrischen Messgeräts, und
- Fig. 3: ein Blockschaltbild einer Ausführungsform eines erfindungsgemäßen portablen Messsystems.

In allen Figuren sind gleiche bzw. funktionsgleiche Elemente und Vorrichtungen - sofern nichts Anderes angegeben ist - mit denselben Bezugszeichen versehen worden.

### Ausführungsformen der Erfindung

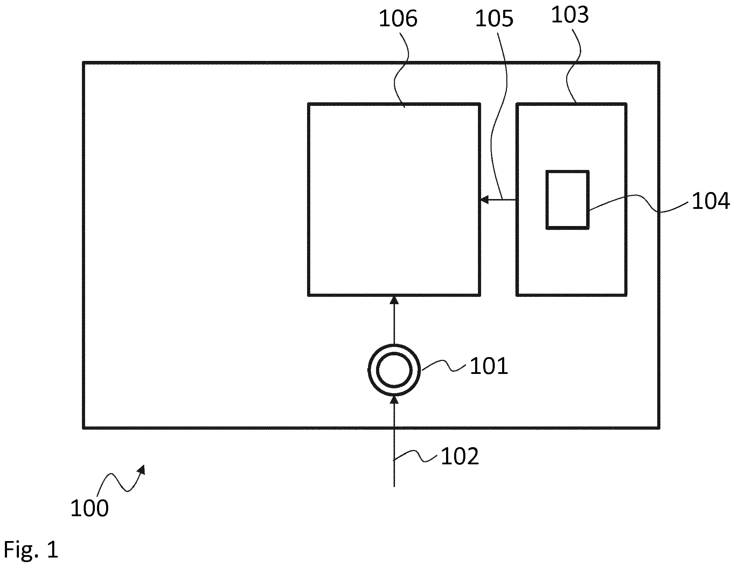

Fig. 1 zeigt ein Blockschaltbild eines elektrischen Messgeräts 100. Das elektrische Messgerät 100 dient dem Erfassen elektrischer Signale 102 über einen Messeingang 101. Es versteht sich, dass der Messeingang 101 lediglich beispielhaft dargestellt ist und dass mehrere Messeingänge möglich sind.

Das elektrische Messgerät 100 weist ferner eine Umfelderfassungseinrichtung 103 mit einem Sensor 104 auf. Die Umfelderfassungseinrichtung 103 ist mit einer Steuereinrichtung 106 gekoppelt.

Der Sensor 104 erfasst physikalische Parameter des momentanen Umfelds des elektrischen Messgeräts 100 und liefert entsprechende Messwerte als Umfeldsignale 105. Es versteht sich, dass eine Vorverarbeitung der Messwerte und z.B. eine Wandlung der Messwerte z.B. in Bussignale oder digitale Signale in der Umfelderfassungseinrichtung 103 stattfinden kann. Der Sensor 104 kann z.B. einen analogen Signaleingang und/oder einen digitalen Signaleingang und/oder einen Beschleunigungssensor und/oder einen Bewegungssensor und/oder einen Höhensensor und/oder einen Gyroskop-Sensor und/oder einen Temperatursensor und/oder einen satellitenbasierten Positionssensor und/oder Magnetfeldsensor und/oder einen Empfänger zum Empfang drahtloser Signale aufweisen.

Die Steuereinrichtung 106 nimmt die Umfeldsignale 105 auf und analysiert diese. Die Steuereinrichtung 106 stellt anhand der Umfeldsignale 105 fest, in welcher Art von Umgebung oder an welchem Ort sich das elektrische Messgerät 100 befindet. Anschließend konfiguriert die Steuereinrichtung 106 Betriebsparameter für das elektrische Messgerät 100 entsprechend.

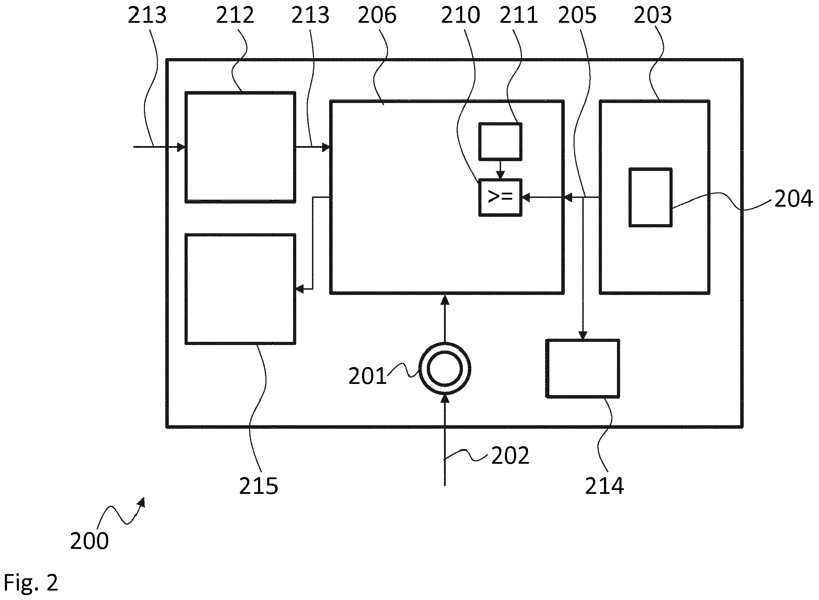

Fig. 2 zeigt ein Blockschaltbild eines weiteren elektrischen Messgeräts 200. Das elektrische Messgerät 200 basiert auf dem elektrischen Messgerät 100. Folglich weist das einen Messeingang 101 zum Erfassen elektrischer Signale 102 auf. Ferner weist das elektrische Messgerät 200 eine Umfelderfassungseinrichtung 203 mit einem Sensor 204 auf. Die Umfelderfassungseinrichtung 203 ist mit einer Steuereinrichtung 206 gekoppelt. Das obigen Erläuterungen zu dem elektrischen Messgerät 100 treffen auch auf das elektrische Messgerät 200 zu. Ferner weist die Steuereinrichtung 206 eine Schwellwerterkennungseinheit 210 auf, welche ausgebildet ist, die Umfeldsignale 205 mit entsprechenden Schwellwerten 211 zu vergleichen, um festzustellen, in welcher Umgebung sich das elektrische Messgerät 200 befindet.

Ferner weist das elektrische Messgerät 200 eine Kommunikationsschnittstelle 212 auf, über welche die Steuereinrichtung 206 Steuersignale 213 empfangen kann. Beispielsweise kann ein Smartphone oder Tablet-PC der Steuereinrichtung 206 entsprechende Steuerbefehle übermitteln.

Das elektrische Messgerät 200 weist ferner einen Speicher 214 auf, in dem die Steuereinrichtung 206 Gruppen aus einem oder mehreren von Betriebsparametern mit entsprechenden Gruppen aus einem oder mehreren von Werten der Umfeldsignale 205 speichert. Die Steuereinrichtung 206 kann von der Umfelderfassungseinrichtung 203 ausgegebene Umfeldsignale 205 mit den gespeicherten Umfeldsignalen 205 vergleichen. Bei einer Übereinstimmung, insbesondere einer Übereinstimmung innerhalb eines vorgegebenen Intervalls, mit einer der gespeicherten Gruppe von Umfeldsignalen 205 kann Steuereinrichtung 206 die entsprechenden Betriebsparameter aus dem Speicher 214 laden und das elektrische Messgerät 200 entsprechend einstellen.

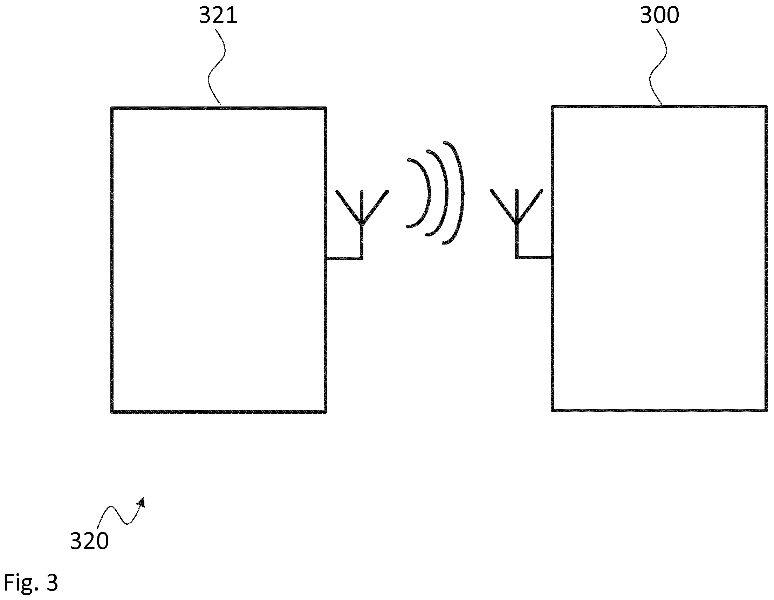

Schließlich weist das elektrische Messgerät 200 eine Anzeigeeinrichtung 215 auf, die mit der Steuereinrichtung 206 gekoppelt ist. Die Steuereinrichtung 206 kann auf der Anzeigeeinrichtung 215 den Umfeldsignalen 205 entsprechende Informationen anzeigen. Fig. 3 zeigt ein Blockschaltbild einer Ausführungsform eines erfindungsgemäßen elektrischen portablen Messsystems 320. Das portable Messsystem 320 weist ein elektrisches Messgerät 300 und eine Eingabevorrichtung 321 auf.

Über die Eingabevorrichtung 321 kann ein Benutzer das elektrische Messgerät 300 steuern. Beispielsweise kann ein Benutzer über die Eingabevorrichtung 321 Eigenschaften des momentanen Umfelds der Eingabevorrichtung 321 an das elektrische Messgerät 300 übermitteln. Ferner kann die Eingabevorrichtung 321 Umfeldsensoren aufweisen und Umfeldsignale erzeugen. Diese in der Eingabevorrichtung 321 erzeugten Umfeldsignale können dann an das elektrische Messgerät 300 übermittelt werden.

Das elektrische Messgerät 300 kann ferner Informationen zu dem momentanen Umfeld des elektrischen Messgeräts 300 an die Eingabevorrichtung 321 übermitteln. Diese kann über eine Anzeigeeinrichtung die Informationen anzeigen.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

### Bezugszeichen

- 100, 200, 300: Elektrisches Messgerät
- 101, 201, 301: Messeingang
- 102, 202, 302: elektrisches Signal
- 103, 203, 303: Umfelderfassungseinrichtung
- 104, 204, 304: Sensor
- 105, 205, 305: Umfeldsignale
- 106, 206, 306: Steuereinrichtung

- 210: Schwellwerterkennungseinheit
- 211: vorgegebener Schwellwert
- 212: Kommunikationsschnittstelle
- 213: Steuersignale
- 214: Speicher
- 215: Anzeigeeinrichtung

- 320: portables Messsystem
- 321: Eingabevorrichtung

## Patentansprüche

1. Elektrisches Messgerät (100, 200, 300) zum Erfassen elektrischer Signale (102, 202, 302), mit
einer Umfelderfassungseinrichtung (103, 203, 303), welche ausgebildet ist, Eigenschaften des momentanen Umfelds des elektrischen Messgeräts (100, 200, 300) zu erfassen und entsprechende Umfeldsignale (105, 205, 305) auszugeben, und
einer Steuereinrichtung (106, 206, 306), welche ausgebildet ist, Betriebsparameter des elektrischen Messgeräts (100, 200, 300) in Abhängigkeit der Umfeldsignale (105, 205, 305) einzustellen.

2. Elektrisches Messgerät (100, 200, 300) nach Anspruch 1, wobei die Umfelderfassungseinrichtung (103, 203, 303) zum Erfassen der Umfeldsignale (105, 205, 305) mindestens einen analogen Signaleingang und/oder einen digitalen Signaleingang und/oder einen Beschleunigungssensor und/oder einen Bewegungssensor und/oder einen Höhensensor und/oder einen Gyroskop-Sensor und/oder einen Temperatursensor und/oder einen satellitenbasierten Positionssensor und/oder Magnetfeldsensor und/oder einen Empfänger zum Empfang drahtloser Signale aufweist.

3. Elektrisches Messgerät (100, 200, 300) nach Anspruch 2, wobei die Steuereinrichtung (106, 206, 306) eine Schwellwerterkennungseinheit (210) aufweist und ausgebildet ist, mindestens eines der erfassten Umfeldsignale (105, 205, 305) mit einem vorgegebenen Schwellwert (211) oder einer Sequenz von Schwellwerten zu vergleichen, um das momentane Umfeld des elektrischen Messgeräts (100, 200, 300) zu bestimmen.

4. Elektrisches Messgerät (100, 200, 300) nach einem der vorherigen Ansprüche, wobei die Umfelderfassungseinrichtung (103, 203, 303) eine Kommunikationsschnittstelle (212) aufweist und ausgebildet ist, Steuersignale (213) zu empfangen und an die Steuereinrichtung (106, 206, 306) weiterzuleiten, und
wobei die Steuereinrichtung (106, 206, 306) ausgebildet ist, basierend auf den Steuersignalen (213) die Betriebsparameter des elektrischen Messgeräts (100, 200, 300) einzustellen.

5. Elektrisches Messgerät (100, 200, 300) nach einem der vorherigen Ansprüche, wobei die Betriebsparameter eine Eingangsempfindlichkeit und/oder eine Achsenskalierung und/oder eine Messmethode und/oder Triggereinstellungen und/oder eine Triggerauswahl und/oder einen Einschaltzustand des elektrischen Messgeräts (100, 200, 300) aufweisen.

6. Elektrisches Messgerät (100, 200, 300) nach einem der vorherigen Ansprüche, mit einem Speicher (214), wobei die Steuereinrichtung (106, 206, 306) mit dem Speicher (214) gekoppelt ist und ausgebildet ist, Gruppen aus einem oder mehreren von Betriebsparametern mit entsprechenden Gruppen aus einem oder mehreren von Werten der Umfeldsignale (105, 205, 305) zu speichern.

7. Elektrisches Messgerät (100, 200, 300) nach Anspruch 6, wobei die Steuereinrichtung (106, 206, 306) ausgebildet ist, von der Umfelderfassungseinrichtung (103, 203, 303) ausgegebene Umfeldsignale (105, 205, 305) mit den gespeicherten Umfeldsignalen (105, 205, 305) zu vergleichen und bei einer Übereinstimmung, insbesondere einer Übereinstimmung innerhalb eines vorgegebenen Intervalls, mit einer der gespeicherten Gruppe von Umfeldsignalen (105, 205, 305) die entsprechenden Betriebsparameter aus dem Speicher (214) zu laden und das elektrische Messgerät (100, 200, 300) entsprechend einzustellen.

8. Elektrisches Messgerät (100, 200, 300) nach einem der vorherigen Ansprüche, mit einer Anzeigeeinrichtung (215), welche mit der Steuereinrichtung (106, 206, 306) gekoppelt ist, wobei die Steuereinrichtung (106, 206, 306) ausgebildet ist, den Umfeldsignalen (105, 205, 305) entsprechende Informationen auf der Anzeigeeinrichtung (215) anzuzeigen.

9. Portables Messsystem (320) mit
einem elektrischen Messgerät (100, 200, 300) nach einem der vorherigen Ansprüche,
einer Eingabevorrichtung (321), welche mindestens einen Umfeldsensor aufweist und ausgebildet ist, Eigenschaften des momentanen Umfelds der Eingabevorrichtung (321) an das elektrische Messgerät (100, 200, 300) zu übermitteln.

10. Portables Messsystem (320) nach Anspruch 9, wobei das elektrische Messgerät (100, 200, 300) ausgebildet ist, Informationen zu dem momentanen Umfeld des elektrischen Messgeräts (100, 200, 300) an die Eingabevorrichtung (321) zu übermitteln, wobei die Eingabevorrichtung (321) eine Anzeigeeinrichtung aufweist und ausgebildet ist, die Informationen anzuzeigen.
